# EUROPEAN PATENT SPECIFICATION

(11) **EP 4 571 247 B1**
(45) Date of publication and mention of the grant of the patent: **27.05.2026**
(21) Application number: 23215520.0
(22) Date of filing: 11.12.2023
(51) Int. Cl.: G01C 15/06, B25H 7/04, G02B 5/12

(54) **TARGET FOR USE IN SURVEYING APPLICATIONS**
ZIEL ZUR VERWENDUNG IN VERMESSUNGSANWENDUNGEN
CIBLE DESTINÉE À ÊTRE UTILISÉE DANS DES APPLICATIONS D'ARPENTAGE

(43) Date of publication of application: 18.06.2025
(73) Proprietor: Trimble Inc., Westminster, CO 80021 (US)
(72) Inventor: GRAESSER, Christian, 182 11 Danderyd (SE); CLAESON, Jonas, 182 11 Danderyd (SE); NATURA, Ute, 182 11 Danderyd (SE)
(74) Representative: AWA Sweden AB

(56) References cited:
- US-A- 4 875 760
- US-A1- 2010 107 429
- US-A1- 2023 098 171

## Description

### Technical field

The present inventive concept relates to a target for use in surveying applications.

### Background

Landscape surveying is a process of measuring and mapping the features and boundaries of a land area. It can be used for various purposes, such as planning, construction, engineering, environmental management, and legal documentation, to name a few. Landscape surveying typically involves using instruments, such as total stations, GPS receivers, laser scanners, and drones, to collect data and create digital models of the terrain.

One of the challenges of landscape surveying is to ensure accuracy and reliability of collected data. To achieve this, surveyors often use targets, which are objects or markers that can be detected and measured by the instruments. Targets can be passive or active, and active target typically include light-emitting diodes (LEDs) and reflective surfaces. The LEDs emit light which is detected by the instruments to locate the target, whereas the reflective surfaces reflect light emitted by the instrument. The reflected light can, for example, be used when determining the distance between the target and the instrument. The light emitted by the LEDs can be used for identification of the target and/or for tracking purposes.

However, existing targets have limitations and drawbacks that affect their performance and usability in landscape surveying applications. For instance, the relative placement between the reflective surfaces and the LEDs at the target can negatively affect the accuracy of the measurements performed by the instrument. Further, in case the instrument detects multiple LEDs, intensity variations of the emitted light can also negatively affect the instrument's ability to accurately determine the location of the target. This, in turn, may negatively affect the instrument's ability to correctly aim at the target which can lead to inaccurate landscape survey data.

Therefore, there is a need for improved targets that, at least partly, can overcome these limitations and drawbacks and provide better results and experiences for landscape surveying applications.

An example of prior art target for use in measuring and surveying applications may be found in US2010/0107429.

### Summary

In view of the above, it is an object of the present inventive concept to provide a target for use in surveying applications which, at least partly, mitigate, alleviate or eliminate one or more of the above-identified deficiencies in the art and disadvantages, singly or in any combination, and solve at least the above-mentioned problem.

A further object is to provide a target for use in surveying applications that allow to increase an accuracy in vertical and/or horizontal aiming of a total station towards the target, in particular for tracking applications.

According to a first aspect, a target for use in surveying applications is provided. The target comprises: a base element having a central axis, a reflector for reflecting light beams being incident on said target, said reflector including a plurality of retroreflectors arranged around said central axis to cover an angular area of substantially 360 degrees, wherein said reflector has an outer circumference and an inner circumference as defined by the arrangement of the retroreflectors and wherein a retroreflector has a first side located at the outer circumference and a second side located at the inner circumference; and a plurality of light emitting elements providing a plurality of apparent light sources arranged around said central axis, wherein an apparent light source is positioned within the inner circumference of the reflector for emitting light in a direction away from the central axis of the base element.

By means of the present inventive concept, light emitted by a light emitting element of the plurality of light emitting elements is allowed to, from a distance, appear to emanate from a position behind a corresponding retroreflector of the plurality of retroreflectors. This, in turn, has advantageous effects. In particular, as compared to a target in which the light emitting elements and thus, the apparent light sources corresponding to the light emitting elements, are arranged at the outside of the target, the present inventive concept provides the benefit of having the apparent light sources being arranged behind the retroflectors (within the inner circumference of the reflector), i.e., closer to the central axis of the base element of the target. Accordingly, for a given position of the instrument detecting or tracking the target, the light emitted from the light emitting elements of the target, as seen from a sensor of the instrument, is less subject to variations due to a rotation of the target, thereby improving the aiming of the instrument towards the target (e.g., the center axis of the target). Thus, an aiming error of the instrument relative the target typically decreases the closer the apparent light sources are to the center axis of the target.

As a further example, it allows the plurality of apparent light sources to be aligned with the plurality of retroreflectors, thereby allowing an accuracy in determining a position of the target using an instrument (e.g., a total station) to be increased.

As mentioned above, the present inventive concept allows the plurality of apparent light sources to be positioned close to the central axis of the base, thereby allowing an accuracy in determining a position of the target using an instrument (e.g., a total station) to be increased. In some embodiments, an apparent light source may be positioned in the first half, and preferably in the first quarter, of a distance from the central axis to the second side of a corresponding one of said plurality of retroreflectors.

The plurality of apparent light sources may consist of N apparent light sources, and at full width at half maximum, FWHM, an apparent light source may have a light intensity distribution covering an angular width of at least 360/N degrees. Thereby, the plurality of light emitting elements may cover at least 360 degrees, whereby at least one apparent light source of the plurality of apparent light sources may be detectable by an instrument from all directions around the target.

A retroreflector may be a corner cube prism. Using a corner cube prism as retroreflector may have a range of advantages compared to other types of retroreflectors. For instance, corner cube prisms may have a high reflectivity since they rely on total internal reflection on surfaces of the prism. Further, corner cube prisms are typically made of solid glass, whereby such retroreflectors may have a lower sensitivity to temperature changes and/or mechanical stress. Furthermore, corner cube prisms may have wide acceptance angles and may thereby reflect light from a large range of incident angles.

A light emitting element may be positioned within the inner circumference of the reflector and may be configured to emit light through a second side of a corresponding retroreflector of said plurality of retroreflectors. A more compact target may thereby be allowed. Further, it may allow the corresponding apparent light source to be positioned within the inner circumference of the reflector without using additional optical components (e.g., lenses and/or mirrors). Furthermore, other components (e.g., electrical wires) coupled to the light emitting element may also be positioned within the inner circumference of the reflector, thereby allowing the target to be more resilient. For instance, a higher degree of weather proofing may be allowed.

The light emitting element may be positioned in proximity to the corresponding retroreflector such that at least 75 % of an intensity of light emitted by the light emitting element may be transmitted through the corresponding retroreflector.

The target may further comprise a plurality of optical coupling elements, wherein an optical coupling element may be arranged between one of the light emitting elements and a corresponding retroreflector and configured to transmit the light emitted from said one of the light emitting elements to the corresponding retroreflector. Thereby, a larger degree of freedom for positions of the plurality of light emitting elements may be allowed. Further, an entrance end of an optical coupling element may be arranged in proximity to a light emitting element and an exit end of the optical coupling element may be arranged in proximity to a corresponding retroreflector, whereby an amount of light emitted by a light source that reaches the corresponding retroreflector may be increased.

An apparent light source provided by one or more light emitting elements may be positioned at an offset position as compared to a position of an apex of a corresponding corner cube prism in a plane having a normal pointing from the central axis to said apex.

An apparent light source provided by one or more light emitting elements may be positioned at the apex of a corresponding corner cube prism.

A light emitting element may be arranged at the first side of a corresponding retroreflector and may be configured to emit light through the first side and towards the central axis of the base element, the light being reflected by the corresponding retroreflector for being directed away from the central axis of the base element. The retroreflector and the light emitting element may be arranged such that light emitted by the light emitting element and reflected by the retroreflector from a distance appear to emerge from an apparent light source positioned within the inner circumference of the reflector. Thereby, the apparent light source may be positioned within the inner circumference of the reflector without needing to modify the retroreflector.

The apex of the corner cube prism may be cut to form the second side of the retroreflector. Thereby, an optical effect on light transmitted through the second side of the corner cube prism may be reduced and/or the loss of power in transmission of the light through the corner cube prism may be reduced.

An apparent light source may be aligned, along the central axis, with the center of the second side of a corresponding retroreflector.

Targets according to the present inventive concept include only one ring of light emitting elements (or apparent light sources), which is advantageous as compared to targets including two rings of light emitting elements and thus causing a lower accuracy in vertical aiming by the instrument due to potential power variation between light emitting elements of the two rings.

For each retroreflector, the second side may be configured to be substantially parallel to the first side. Accordingly, a direction of light may, after propagation through the second side and the first side, remain substantially unaffected.

The second side may comprise a polished surface. Thereby, an optical quality of the second side may be enhanced.

The target may further comprise a plurality of optical coupling elements configured to shape the light emission of the plurality of light emitting elements, wherein an optical coupling element may be arranged between a light emitting element and its corresponding apparent light source. Thereby, properties (e.g., a divergence) of the light emitted by a light emitting element may be adjusted using a corresponding optical coupling element.

Each light emitting element may be at least one of a light emitting diode, a laser or a vertical-cavity surface-emitting laser.

The plurality of retroreflectors may be between 6 and 10, preferably 8. Put differently, the plurality of retroreflectors may consist of 6 to 10 retroreflectors. Preferably, the plurality of retroreflectors may consist of 8 retroreflectors.

An apparent light source may be provided by more than one light emitting element. Accordingly, each light emitting element of the more than one light emitting elements may be configured to emit light at a lower intensity while still providing an apparent light source from which light may emanate having an intensity comparable, or even identical, to an apparent light source provided by a single light emitting element configured to emit light at a higher intensity. This, in turn, may reduce a local temperature of each light emitting element. Further, since each of the one or more light emitting elements may be coupled to its own heat sink, providing an apparent light source by more than one light emitting element may reduce the local temperature of each light emitting element (compared to providing an apparent light source by one light emitting element). In case the light emitting elements are a type of laser (e.g., a vertical-cavity surface-emitting laser), interference effects (e.g., speckle formation) may be reduced in case the apparent light source is provided by more than one light emitting element. This, since different laser sources typically may have a low coherence.

For each retroreflector, the ratio of the surface area of the second side to a surface area of the first side may be 2 % to 50 %.

Further features of, and advantages with, the present inventive concept will become apparent when studying the appended claims and the following description. The skilled person will realize that different features of the present inventive concept may be combined to create variants other than those described in the following, without departing from the scope of the present inventive concept, as defined by the appended set of claims.

### Brief description of the drawings

The aspects of the present inventive concept, including its particular features and advantages, will be readily understood from the following detailed description and the accompanying drawings, in which:
Figure 1A is a schematical illustration of a side view of a target for use in surveying applications.
Figure 1B is a schematical illustration of a top view of the target of Fig. 1A.
Figure 1C is a schematical illustration of a side view of an arrangement in which an apparent light source is provided by more than one light emitting element.
Figure 1D is a schematical illustration of a rear view of the arrangement illustrated in Fig. 1C.
Figures 2A - 2E are schematical illustrations of examples of how the plurality of light emitting elements may be arranged relative to the reflector of the target.

### Detailed description

The present inventive concept will now be described more fully hereinafter with reference to the accompanying drawings, in which currently preferred variants of the inventive concept are shown and discussed. This inventive concept may, however, be implemented in many different forms and should not be construed as limited to the variants set forth herein; rather, these variants are provided for thoroughness and completeness, and fully convey the scope of the present inventive concept to the skilled person. As illustrated in the figures, features may be exaggerated for illustrative purposes and, thus, may be provided to illustrate the general structures of variants of the present inventive concept. Like reference numerals refer to like elements throughout the description.

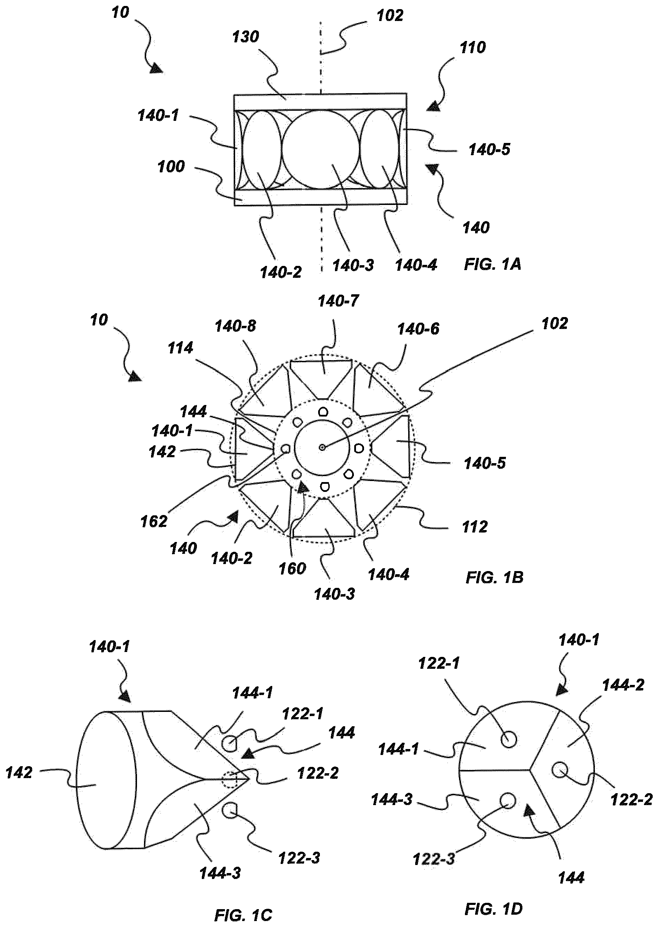

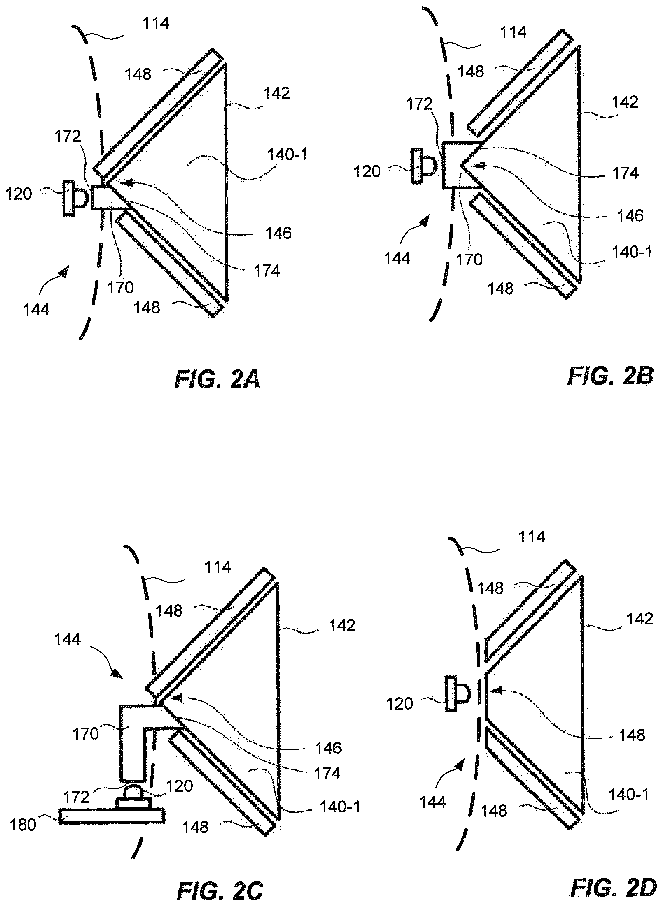

Figure 1A illustrates a side view of a target 10 for use in surveying applications. Figure 1B illustrates a top view of the target 10 of Fig. 1A. As is seen in Fig. 1A and Fig. 1B, the target 10 comprises a base element 100 and a reflector 110. The target 10 further comprises a plurality of light emitting elements. However, a positioning of the plurality of light emitting elements may vary, and examples of this positioning will be illustrated in Fig. 2A - Fig. 2E and discussed further below with reference to those figures. As is seen in the example of Fig. 1A, the target 10 may further comprise a top element 130. The base element 100 has a central axis 102. The base element 100 may be configured to be coupled to a target pole, or surveying pole or rod (not illustrated). Hence, the target 10 may be configured to be coupled to the target pole. The target pole may allow the target 10 to be placed (e.g., in a landscape) when the target 10 is to be used in a landscape survey. The target pole may include a pointing tip for placing the target pole at a specific location. The target 10 may be coupled to the target pole using suitable fastening means. Suitable fastening means may comprise screws, bolts, threads, etc. The reflector 110 may be arranged on the base element 100. The reflector 110 is configured for reflecting light beams being incident on said target 10. In particular, the reflector 110 is configured for reflecting light beams incident on said target back to a source of said light beams, for example back to a surveying instrument having emitted the light beams towards the target. To that end, the reflector 110 includes a plurality of retroreflectors 140 arranged around said central axis 102 to cover an angular area of substantially 360 degrees, which is illustrated in Fig. 1B. Put differently, the reflector may be configured to reflect light beams incident on the target from all directions along a plane having a normal substantially parallel to the central axis and intersecting the reflector. Such plane may typically be a horizontal plane. The plurality of retroreflectors may be between 6 and 10, preferably 8. Put differently, the plurality of retroreflectors 140 may consist of 6 to 10 retroreflectors. Preferably, the plurality of retroreflectors may consist of 8 retroreflectors. In the examples of Fig. 1A and Fig. 1B, the target 10 comprises 8 retroreflectors 140-1, 140-2, 140-3, 140-4, 140-5, 140-6, 140-7, 140-8. It is to be understood that the number of retroreflectors may be chosen depending on a size of each retroreflector. Additionally, a size of the target 10 may also affect the number of retroreflectors. Vice versa, the size of the target 10 may depend on the size of the retroreflectors and the number of retroreflectors. Typically, the number of retroreflectors is chosen such that the plurality of retroreflectors may cover an angular width of 360 degrees around the target 10. Put differently, light beams incident on the target 10 from any direction along a plane having a normal parallel to the central axis 102 of the base element 100 may be retroreflected. The plurality of retroreflectors 140 may be arranged on the base element 100, which is illustrated in the examples of Fig. 1A and Fig. 1B. For instance, one or more retroreflectors of the plurality of retroreflectors 140 may be corner reflectors. Further, as in the example of Fig. 1A and Fig. 1B, one or more retroreflectors of the plurality of retroreflectors 140 may be corner cube prisms. One or more surfaces of a retroreflector may be coated. For instance, a reflective surface of a corner reflector may be coated to increase reflectivity. As a further example, surfaces of corner cube prisms may typically be coated. For instance, an entrance surface of a corner cube prism may be coated to increase transmittance through the entrance surface. Further, an outside surface of an inner reflective surface of a corner cube prism may be coated to increase reflectivity of the inner reflective surface. The reflector 110 has an outer circumference 112 and an inner circumference 114. The outer circumference 112 and the inner circumference 114 are defined by the arrangement of the retroreflectors 140. As is seen in Fig. 1B, a retroreflector 140 has a first side 142 located at (or in a proximity of) the outer circumference 112 and a second side 144 located at (or in a proximity of) the inner circumference 114.

The plurality of light emitting elements provides a plurality of apparent light sources 160 arranged around said central axis 102. An apparent light source 162 of the plurality of apparent light sources 160 is positioned within the inner circumference 114 of the reflector 110 for emitting light in a direction away from the central axis 102 of the base element 100. Put differently, light emitted by a light emitting element of the plurality of light emitting elements is allowed to, from a distance, appear to emanate from a position behind a corresponding retroreflector of the plurality of retroreflectors 140. To this end, the plurality of light emitting elements may be arranged relative to the reflector 110 in a few different ways. Examples of such arrangements will be described further below with reference to Fig. 2A - Fig. 2E.

However, it may be advantageous if the apparent light source 162 is positioned as close to the central axis 102 of the base element 100 as possible since the closer to the central axis 102 that the apparent light source 162 is positioned, the smaller the aiming error of an instrument (e.g., a total station) relative the target 10 will be. Typically, the true position of the target 10 may be the central axis 102 of the base element 100. However, there are physical constraints that must be taken into account. For instance, a size of the retroreflectors may define the inner and outer circumferences of the reflector 110. Hence, the size of the retroreflectors may limit how small the inner and outer circumferences can be. Thus, by positioning the apparent light sources inside the inner circumference of the reflector 110, the aiming error of an instrument relative the target 10 may be reduced.

Further to the above, it will be appreciated that, in some embodiments, the number of apparent light sources corresponds to the number of retroreflectors. Accordingly, the number of apparent light sources arranged around the central axis within the inner circumference of the retroreflectors, and thereby the radius of the ring (or circle) formed by the arrangement of the apparent light sources within the inner circumference, is limited by the same constraints as those mentioned above for the retroreflectors. In general, the smaller the radius the smaller the aiming error of the surveying instrument. The radius of the ring formed by the apparent light sources may be included in the function of the aiming error of the surveying instrument.

It is to be understood that the number of light emitting elements and the number of apparent light sources may be the same or different. Put differently, each apparent light source of the plurality of apparent light sources may be provided by one or more light emitting elements of the plurality of light emitting elements. In some embodiments, each apparent light source of the plurality of apparent light sources is provided by one light emitting element of the plurality of light emitting elements. In some embodiments, such as the example illustrated in Fig. 1C and Fig. 1D, each apparent light source of the plurality of apparent light sources is provided by two or more light emitting elements 122-1, 122-2, 122-3 of the plurality of light emitting elements. In such case, intensities of light emitted by two or more light emitting elements 122-1, 122-2, 122-3 may be similar or substantially identical. Optical components (e.g., optical lenses, etc., not illustrated in Fig. 1C and Fig. 1D) may be arranged such that the two or more light emitting elements 122-1, 122-2, 122-3 provide one apparent light source. For instance, it may be advantageous to arrange the one or more light emitting elements symmetrically with respect to the second side 144 of the retroreflector 140-1. Hence, the two or more light emitting elements 122-1, 122-2, 122-3 of the plurality of light emitting elements may be arranged symmetrically with respect to a plane of symmetry of the retroreflector 140-1. This is illustrated in Fig. 1D, in which the two or more light emitting elements 122-1, 122-2, 122-3 are arranged symmetrically with respect to the second side 144 of the retroreflector 140-1. For instance, in case the retroreflector is a corner cube prism, as is illustrated in the example of Fig. 1C and Fig. 1D, the second side 144 of the retroreflector 140-1 may comprise more than one surface 144-1, 144-2, 144-3, and one light emitting element 122-1, 122-2, 122-3 may be arranged and configured to emit light through each of the more than one surface 144-1, 144-2, 144-3. However, the light emitting elements may be arranged such that they appear as one apparent light source as seen from a distance from the target 10. Providing the apparent light source by more than one light emitting element may allow an intensity of light emanating from the apparent light source to be higher (compared to an apparent light source provided by one light emitting element). Each light emitting element of the more than one light emitting elements may be configured to emit light at a lower intensity while still providing an apparent light source from which light may emanate having an intensity comparable, or even identical, to an apparent light source provided by a single light emitting element configured to emit light at a higher intensity. This, in turn, may reduce a local temperature of each light emitting element. Further, since each of the one or more light emitting elements may be coupled to its own heat sink, providing an apparent light source by more than one light emitting element may reduce the local temperature of each light emitting element (compared to providing an apparent light source by one light emitting element). In case the light emitting elements are a type of laser (e.g., a vertical-cavity surface-emitting laser), interference effects (e.g., speckle formation) may be reduced in case the apparent light source is provided by more than one light emitting element. This, since different laser sources typically may have a low coherence. Even though providing an apparent light source by more than one light emitting element has been illustrated in Fig. 1C and Fig. 1D using a corner cube prism, it is to be understood that the same description applies mutatis mutandis to other types of retroreflectors as well.

In this respect, in for example a surveying instrument equipped with a tracker or tracking unit, the surveying instrument has the capability to follow a target by detecting light emitting from light emitting elements mounted on a target. Generally, the light emitting elements are circumferentially arranged at the target. In some prior art targets, two rings of light emitting elements are arranged at the outer periphery (or the exterior surface) of the target, one below the ring of prisms and one above the ring of prisms.

Typically, the tracker or tracking unit of a surveying instrument ensures that a line of sight of the surveying instrument points toward the target by a contribution of light on the left side (or left half) of a sensor of the tracker equal to a contribution of light on the right side (or right half) of the sensor. The sensor may be a light sensitive detector such as for example a camera or quadrant sensor or the like, at least having a sensitive area that can be separated horizontally in two zones. Other types of sensors may be envisaged.

Ideally, for any angle of rotation of the target at a given position of the target, if the target is not moved horizontally, then the line of sight of the instrument towards the target should not change. However, since the tracker follows the target (or is lock on the target) by keeping the contribution of light on the left side of the sensor equal to the contribution of light on the right side, a rotation of the target emitting light by means of a circular arrangement of individual light emitting elements might be interpreted as an horizontal movement of the target, thereby causing an error in the horizontal determination of the target by the surveying instrument.

With the present inventive concept, the apparent light sources (or in some embodiments the light emitting elements themselves) are arranged behind the prisms of the target, i.e., closer to the central axis of the target, thereby reducing the above mentioned errors in horizontal determination of the position of the target.

An apparent light source 162 may be positioned in the first half, and preferably in the first quarter, of a distance from the central axis 102 to the second side 144 of a corresponding one of said plurality of retroreflectors 140. One or more light emitting elements of the plurality of light emitting elements may be light emitting diodes (LEDs). One or more light emitting elements of the plurality of light emitting elements may be lasers. One or more light emitting elements of the plurality of light emitting elements may be vertical-cavity surface-emitting lasers (VCSELs). The plurality of light emitting elements may be configured to emit light. For instance, the emitted light may have a specific color. Put differently, the plurality of light emitting elements may be configured to emit light having a wavelength in a range of wavelengths. The plurality of light emitting elements may be configured to emit continuous (or substantially continuous) light. The plurality of light emitting elements may be configured to emit pulsed light. It is to be understood that the light emitting elements may comprise optics configured to affect properties of the emitted light. Examples of such optics may be lenses, filters, apertures, etc. As a particular example, a light emitting element may comprise a lens configured to reduce (or increase) a divergence of the emitted light. For instance, the lens may be configured to collimate the emitted light. The plurality of apparent light sources may consist of N apparent light sources. The plurality of light emitting elements may consist of N light emitting elements. The plurality of retroreflectors may consist of N retroreflectors. In one variant, the target 10 may comprise N retroreflectors and N light emitting elements providing N light apparent light sources. At full width at half maximum (FWHM), an apparent light source 162 may have a light intensity distribution covering an angular width of at least 360/N degrees. Put differently, the plurality of apparent light sources 160 may cover at least 360 degrees. This means that when observing the target 10 from a position in a vicinity of the target 10, light emerging from at least one apparent light source 162 of the plurality of apparent light sources 160 may be detectable by, e.g., a total station (or other kind of surveying instruments). In the examples of Fig. 1A and Fig. 1B, the apparent light source 162 may have a light intensity distribution covering an angular width of at least 45 degrees at FWHM.

Figure 2A - Fig. 2E illustrate examples of how the plurality of light emitting elements may be arranged relative to the reflector 110. This is exemplified in each of Fig. 2A - Fig. 2E by schematically illustrating a single retroreflector 140-1 of the plurality of retroreflectors and a single light emitting element 120 of the plurality of light emitting elements. As is seen in the examples of Fig. 2A - Fig. 2D, the light emitting element 120 may be positioned within the inner circumference 114 of the reflector 110. Put differently, the light emitting element 120 may be positioned in a proximity of the second side 144 of the retroreflector 140-1. The light emitting element 120 may further be configured to emit light through the second side 144 of a corresponding retroreflector 140-1 of said plurality of retroreflectors 140. Put differently, the light emitting element 120 may, as is illustrated in Fig. 2A - Fig. 2D, be configured to emit light through the retroreflector 140-1. Even though it may be beneficial if the apparent light source provided by one or more light emitting element 120 is positioned as close as possible to the central axis 102 of the base element 100, the actual light emitting element 120 may be positioned and/or arranged such that enough light is transmitted through the corresponding retroreflector 140-1. For instance, the light emitting element 120 may be positioned in proximity to the corresponding retroreflector 140-1 such that at least 75 % of an intensity of light emitted by the light emitting element 120 may be transmitted through the corresponding retroreflector 140-1. This is to ensure that the light emitted by the light emitting element 120 and transmitted through the corresponding retroreflector 140-1 may be detectable by an instrument (e.g., a total station) from a (large) distance. Thus, "enough light" should here be construed as an amount of light needed in order for the target 10 to function as intended. For instance, light emitted by the light emitting element 120 and transmitted through the corresponding retroreflector 140-1 should be detectable by the instrument (e.g., a total station) from a distance relevant for the intended use of the target 10. For example, it may be a distance relevant for landscape surveying.

As is seen in the examples of Fig. 2A - Fig. 2C, the target 10 may further comprise a plurality of optical coupling elements 170. An optical coupling element 170 may be arranged between one 120 of the light emitting elements and a corresponding retroreflector 140-1 and configured to transmit the light emitted from said one 120 of the light emitting elements to the corresponding retroreflector 140-1. Thereby, a larger degree of freedom for positioning the plurality of light emitters may be increased. Further, an optical coupling element 170 may be configured to affect light emitted by a light emitting element 120 whereby the light intensity distribution associated with the corresponding apparent light source may be adjusted. For instance, an optical coupling element 170 may be configured such that the apparent light source at **FWHM** may have the light intensity distribution covering an angular width of at least 360/N degrees (N being the number of apparent light sources). As a further example, an optical coupling element 170 may be configured such that at least 75 % of the intensity of light emitted by the light emitting element 120 may be transmitted through the corresponding retroreflector 140-1. Further, as in the examples of Fig. 2A and Fig. 2B, the light emitting element 120 may be positioned in proximity to an apex 146 of the respective retroreflector 140-1.

As in the examples of Fig. 2A and Fig. 2B, the optical coupling element 170 may be a polymer prism. The polymer prism may be attached to the retroreflector 140-1. For instance, the polymer prism may be glued to the retroreflector 140-1. A portion of the surface of the retroreflector 140-1 to which the polymer prism is glued may be uncoated such that the emitted light may be transmitted through the retroreflector. For instance, this portion may be polished. A difference between the examples of Fig. 2A and Fig. 2B is that the apparent light source in Fig. 2A is positioned offset from the apex 146 of the retroreflector 140-1, whereas the apparent light source in Fig. 2B is aligned with the apex of the retroreflector 140-1. An advantage of the example of Fig. 2A is that a shape of the optical coupling element 170 may be simpler, in particular compared to a shape of the optical coupling element 170 in the example of Fig. 2B. This may, in turn, allow for a less complex manufacturing of the optical coupling element 170 and/or a reduction in production costs. However, an advantage of the example of Fig. 2B is that the light emitting element 120 may be centered in relation to a symmetry of the retroreflector 140-1. An entrance end 172 of the optical coupling element 170 may be arranged in proximity to the light emitting element 120 and an exit end 174 of the optical coupling element 170 may be arranged in proximity to the corresponding retroreflector 140-1, whereby an amount of light emitted by a light emitting element 140-1 that reaches the corresponding retroreflector 140-1 may be increased. As illustrated in the example of Fig. 2C, the light emitting element 120 may be more freely positioned, since an optical coupling element 170 may be arranged such that the light emitted from the light emitting element 140-1 may be transmitted to the corresponding retroreflector 140-1. In the example of Fig. 2C, the light emitting element 120 is positioned on a printed circuit board (PCB) 180 of the target 10. Each light emitting element of the plurality of light emitting elements may be positioned on the PCB 180. Thus, positioning the light emitting elements on the PCB 180 may allow for a less complex design (e.g., of electronics associated with the light emitting elements). For instance, this may allow for a single PCB 180 to be used for all (or almost all) light emitting elements of the plurality of light emitting elements. As in the example of Fig. 2C, the optical coupling element 170 may be a light pipe, a waveguide, or an optical fiber. Even though the exit end 174 of the optical coupling element 170 of Fig. 2C is offset to the apex 146 of the retroreflector 140-1, it is to be understood that the exit end 174 may be aligned with the apex 146 of the retroreflector 140-1. Thus, an apparent light source provided by one or more light emitting elements 120 may, as illustrated in Fig. 2A and Fig. 2C, be positioned at an offset position as compared to a position of the apex 146 of a corresponding retroreflector 140-1 (e.g., a corner cube prism) in a plane having a normal pointing from the central axis 102 to said apex 146. Alternatively, an apparent light source provided by one or more light emitting elements 120 may, as illustrated in Fig. 2B, be positioned at the apex 146 of a corresponding retroreflector 140-1(e.g., a corner cube prism). Further, one or more of the plurality of optical coupling elements may be configured to shape the light emission of the plurality of light emitting elements. Thereby, properties of the light emitted by a light emitting element 120 may be adjusted using a suitable optical coupling element. The plurality of optical coupling elements configured to shape the light emission of the plurality of light emitting elements may comprise one or more of a lens, a prism, a waveguide, cylinder pipe, a conical pipe, and a freeform reflector. For example, a divergence of emitted light may be adjusted using a lens. An optical coupling element may be configured to adjust a vertical divergence and a horizontal divergence to different degrees. Put differently, the optical coupling element may be configured such that the vertical divergence and the horizontal divergence of the emitted light may be different. For instance, the horizontal divergence of the emitted light may be adjusted such that an illumination profile of the emitted light may be more even. This, in turn, may allow a reduced horizontal measurement error when determining a position of the target using an instrument (e.g., a total station). The vertical divergence of the emitted light may be adjusted for range performance. Put differently, the vertical divergence of the emitted light may be adjusted such that the emitted light may have an intensity which is detectable by an instrument (e.g., a total station) positioned at a distance from the target. Further, the vertical divergence of the emitted light may be adjusted to fulfil illumination angle requirements. For instance, in case the target is mounted on a tilted rod, the vertical divergence of the emitted light may be adjusted such that the emitted light is detectable by an instrument (e.g., a total station) positioned at a distance from the target. Further, a light emitting element 120 may be at least partly arranged within a cylinder pipe (if present).

As in the example illustrated in Fig. 2D, the retroreflector 140-1 may be a corner cube prism, and the apex 146 of the corner cube prism 1 may be cut to form the second side 144 of the retroreflector 140-1. Thereby, an optical effect on light transmitted through the second side 144 of the corner cube prism may be reduced. Further, a larger portion of light emitted by the light emitting element 120 may be allowed to pass through the cut apex of the corner cube prism since light emitted at a wider angle from the light emitting element may be allowed to pass through the cut apex of the corner cube prism. For instance, a divergence and/or a direction of the light transmitted through the second side 144 of the retroreflector 140-1 may be largely unaffected. To even further improve optical properties of a surface of the second side 144 of the corner cube prism, the second side 144 may comprise a polished surface. For example, a portion of a coating 148 (if present) on a surface of the second side 144 of the corner cube prism may be removed, thereby allowing light to be transmitted through the second side 144 of the corner cube prism. As in the example of Fig. 2D, an apparent light source may be aligned, along the central axis 102 of the base element 100, with the center of the second side 144 of a corresponding retroreflector 140-1. Hence, the light emitting element 120 in the example illustrated in Fig. 2D may be centered in relation to a symmetry of the retroreflector 140-1. Thereby, the optical effect on light transmitted through the second side 144 of the retroreflector 140-1 may be reduced. For each retroreflector, the second side 144 may be configured to be substantially parallel to the first side 142. Put differently, the apex 146 of each corner cube prism may be cut such that the resulting surface may be substantially parallel to the first side 142. Further, for each retroreflector, the ratio of the surface area of the second side 144 to a surface area of the first side 142 may be 2 % to 50 %. Put differently, the apex 146 of each corner cube prism may be cut such that the ratio of the surface area of the second side 144 to a surface area of the first side 142 may be 2 % to 50 %.

It is to be understood that for the examples illustrated in Fig. 2A - Fig. 2C, the apex 146 of the retroreflector 140-1 may be cut to form the second side 144 of the retroreflector 140-1. This may be beneficial in case the retroreflector 140-1 in the examples of Fig. 2A- Fig. 2C is a corner cube prism. The effects and advantages described in connection with Fig. 2D apply to such implementations as well. However, it is to be understood that for the examples of Fig. 2A - Fig. 2C, a corner cube prism having a conventional shape (i.e., without a cut apex) may be used.

Further, the apparent light source 162 provided by one or more light emitting elements 120 are not illustrated in the examples of Fig. 2A - Fig. 2D since the position of the apparent light source 162 may vary. However, for each example, the position of the apparent light source 162 is within the inner circumference 114 of the reflector 110. As an example, assuming that the retroreflector 140-1 (i.e., the corner cube prism having a cut apex 146) in Fig. 2D does not substantially affect the light (e.g., a divergence of the light) emitted by the light emitting element 120, a position of the apparent light source 162 and a position of the light emitting element may be the same position.

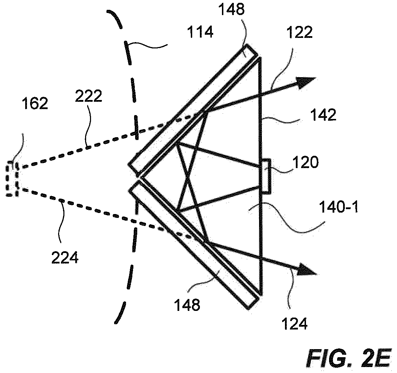

As in the example of Fig. 2E, a light emitting element 120 may be arranged at the first side 142 of a corresponding retroreflector 140-1. The light emitting element 120 may, as illustrated in Fig. 2E, be mounted on a surface of the first side 142 of the retroreflector 140-1. However, it is to be understood that the light emitting element 120 may be mounted such that there is a gap between the light emitting element 120 and the surface of the first side 142 of the retroreflector 140-1. As is further seen in the example of Fig. 2E, the light emitting element 120 may be centered in relation to a symmetry of the retroreflector 140-1. The light emitting element 120 may be configured to emit light through the first side 142 and towards the central axis 102 of the base element 100. As the light emitting element 120 in the example of Fig. 2E is arranged at the first side, the retroreflector 140-1 may not need any modification. For instance, in case the retroreflector 140-1 is a corner cube prism, an apex of the corner cube prism may not need to be cut and/or a coating 148 may not need to be removed for the example of Fig. 2E. Thus, a standard corner cube prism may be used. In the example illustrated in Fig. 2E, the light emitting element 120 is a VCSEL. The VCSEL may comprise beam shaping elements configured to shape the light beam emitted by the VCSEL. For instance, the beam shaping elements may be configured to adjust a divergence of the light beam emitted by the VCSEL. The retroreflector 140-1 and the light emitting element 120 may be arranged such that light emitted by the light emitting element 120 is reflected by the retroreflector 140-1. After being reflected, the light may, from a distance, appear to emerge from an apparent light source 162 positioned within the inner circumference 114 of the reflector 110. Put differently, the divergence of light emitted by the light emitting element 120, and positions and orientations of reflective surfaces of the retroreflector 140-1 may be configured such that the apparent light source 162 is positioned within the inner circumference 114 of the reflector 110. This may, in turn, allow that the apparent light source 162 is positioned close to, or even at, the central axis 102 of the base element 100. The light emitted from the light emitting element 120 is represented by two arrows 122, 124 in Fig. 2E. As is seen in Fig. 2E, the two arrows 122, 124 illustrate a path in which each light ray 122, 124 is reflected twice by the retroreflector 140-1. After the two reflections, the light rays exit through the first side 142 of the retroreflector 140-1. After exiting through the first side 142 of the retroreflector 140-1, the light rays are diverging such that they appear to emerge from the apparent light source 162 positioned within the inner circumference 114 of the reflector 110. This is illustrated by two dashed lines 222, 224 in Fig. 2E.

Even though not explicitly illustrated in Fig. 2E, the divergence of the emitted light may be adjusted using an optical coupling element 170 (e.g., a lens) and/or beam shaping elements comprised in the VCSEL. Thus, the example illustrated in Fig. 2E may allow the apparent light source 162 to be positioned within the inner circumference 114 of the reflector 110 without needing to modify the retroreflector 140-1 (e.g., by cutting an apex and/or by removing coating).

Even though not explicitly illustrated in Fig. 1A - Fig. 1B, the target 10 may further comprise circuitry. The circuitry may comprise one or more of a processing unit, a memory, a transceiver, a power source, and a data bus. The PCB 180 illustrated in Fig. 2C may, e.g., form part of the circuitry. One or more of the processing unit, the memory, and the transceiver may be configured to communicate via the data bus. The processing unit may comprise a central processing unit (CPU). The processing unit may be configured to control one or more components and/or functions of the target. The memory may be a non-transitory computer-readable storage medium. The memory may be a random-access memory. The memory may be a non-volatile memory. The memory may be configured to store program code portions corresponding to one or more functions. The program code portions may be executable by the processing unit, which thereby performs the functions. Hence, the circuitry may control components and/or perform functions by the processing unit being configured to execute program code portions corresponding to the specific function which may be stored on the memory. However, it is to be understood that one or more functions of the circuitry may be hardware implemented and/or implemented in a specific integrated circuit. For example, one or more functions may be implemented using field-programmable gate arrays (FPGAs). Put differently, one or more functions of the circuitry may be implemented in hardware or software, or as a combination of the two. The transceiver may be configured to communicate with external devices. For example, the transceiver may be configured to communicate with servers, computer external peripherals (e.g., external storage), etc. The external devices may be local devices or remote devices (e.g., a cloud server). The transceiver may be configured to communicate with the external devices via an external network (e.g., a local-area network, the internet, etc.) The transceiver may be configured for wireless and/or wired communication. Suitable technologies for wireless communication are known to the skilled person. Some non-limiting examples comprise Wi-Fi and Near-Field Communication (NFC). Suitable technologies for wired communication are known to the skilled person. Some non-limiting examples comprise USB, Ethernet, and Firewire. The power source may be a battery. The power source may be configured to provide electrical power to one or more components of the target. For instance, the power source may be configured to provide electrical power to the plurality of light emitting elements. Further, the power source may be configured to provide electrical power to one or more of the memory, the processing unit, the transceiver, and the data bus. Further, the PCB 180 (if present) may form part of the circuitry.

The person skilled in the art realizes that the present inventive concept by no means is limited to the preferred variants described above. On the contrary, many modifications and variations are possible within the scope of the appended claims.

For instance, the examples illustrated in Fig. 2A - Fig. 2C comprises optical coupling elements. It is however to be understood that such components may not be needed for at least the examples illustrated in Fig. 2A and Fig. 2B.

As a further example, in the examples illustrated in Fig. 2A - Fig. 2E, the retroreflector 140-1 comprises a coating 148. This coating may be applied to increase a reflectivity for light beams (e.g., from a total station) incident on the target 10. As is discussed above, a portion of the area might not contain a reflective coating on the retroreflector 140-1 to allow light locally to be transmitted through the second side 144 of the retroreflector 140-1. However, it is to be understood that the retroreflector 140-1 may not comprise a coating 148 at all.

As a further example, additional optical components may be present in the examples illustrated in Fig. 2A - Fig. 2E. Such additional optical components may be configured to shape a distribution of light emitted by the light-emitting element 120. For instance, such additional optical components may be positioned between the light emitting element 120 and the retroreflector 140-1 in the examples illustrated in Fig. 2B and Fig. 2D. Such additional optical components may be configured such that a light distribution at a distance from the target 10 may be more homogenous with respect to rotational angles of the target 10.

Additionally, variations to the disclosed variants can be understood and effected by the skilled person in practicing the claimed invention, from a study of the drawings, the disclosure, and the appended claims.

## Claims

1. A target (10) for use in surveying applications, said target (10) comprising:
a base element (100) having a central axis (102), and
a reflector (110) for reflecting light beams being incident on said target (10), said reflector (110) including a plurality of retroreflectors (140) arranged around said central axis (102) to cover an angular area of substantially 360 degrees, wherein said reflector (110) has an outer circumference (112) and an inner circumference (114) as defined by the arrangement of the retroreflectors and wherein a retroreflector (140-1) has a first side (142) located at the outer circumference (112) and a second side (144) located at the inner circumference (114);
said target being **characterized by**:
a plurality of light emitting elements providing a plurality of apparent light sources (160) arranged around said central axis (102), wherein an apparent light source (162) is positioned within the inner circumference (114) of the reflector (110) for emitting light in a direction away from the central axis (102) of the base element (100).

2. The target (10) according to claim 1, wherein an apparent light source (162) is positioned in the first half, and preferably in the first quarter, of a distance from the central axis (102) to the second side (114) of a corresponding one (140-1) of said plurality of retroreflectors (140).

3. The target (10) according to claim 1 or 2, wherein the plurality of apparent light sources consists of N apparent light sources, and wherein, at full width at half maximum, FWHM, an apparent light source (162) has a light intensity distribution covering an angular width of at least 360/N degrees.

4. The target (10) according to any of the preceding claims, wherein a retroreflector (140-1) is a corner cube prism.

5. The target (10) according to claim 4, wherein a light emitting element (120) is positioned within the inner circumference (114) of the reflector (110) and configured to emit light through a second side (144) of a corresponding retroreflector (140-1) of said plurality of retroreflectors (140).

6. The target (10) according to claim 5, wherein the light emitting element (120) is positioned in proximity to the corresponding retroreflector (140-1) such that at least 75 % of an intensity of light emitted by the light emitting element (120) is transmitted through the corresponding retroreflector (140-1).

7. The target (10) according to any one of claims 4 or 5, further comprising a plurality of optical coupling elements, wherein an optical coupling element (170) is arranged between one (120) of the plurality of light emitting elements and a corresponding retroreflector (140-1) and configured to transmit the light emitted from said one (120) of the plurality of light emitting elements to the corresponding retroreflector (140-1).

8. The target (10) according to claim 7, wherein an apparent light source (162) provided by one or more light emitting elements (120) is positioned at an offset position as compared to a position of an apex (146) of a corresponding corner cube prism in a plane having a normal pointing from the central axis (102) to said apex (146).

9. The target (10) according to claim 7, wherein an apparent light source (162) provided by one or more light emitting element (120) is positioned at the apex (146) of a corresponding corner cube prism.

10. The target (10) according to claim 4, wherein a light emitting element (120) is arranged at the first side (142) of a corresponding retroreflector (140-1) and configured to emit light through the first side (142) and towards the central axis (102) of the base element (100), said light being reflected by the corresponding retroreflector for being directed away from the central axis (102) of the base element (100).

11. The target (10) according to any one of claims 4-6, wherein the apex (146) of the corner cube prism is cut to form the second side (144) of the retroreflector (140-1).

12. The target (10) according to claim 11, wherein an apparent light source (162) is aligned, along the central axis (102), with the center of the second side (144) of a corresponding retroreflector (140-1).

13. The target (10) according to claim 11 or 12, wherein, for each retroreflector, the second side (144) is configured to be substantially parallel to the first side (142).

14. The target (10) according to any one of claims 11-13, wherein the second side (144) comprises a polished surface.

15. The target (10) according to any of the preceding claims, further comprising a plurality of optical coupling elements configured to shape the light emission of the plurality of light emitting elements, wherein an optical coupling element (170) is arranged between a light emitting element (120) and its corresponding apparent light source (162).

16. The target (10) according to claim any of the preceding claims, wherein each light emitting element is at least one of a light emitting diode, a laser or a vertical-cavity surface-emitting laser.

17. The target (10) according to any of the preceding claims, wherein the plurality of retroreflectors (140) is between 6 and 10, preferably 8.

18. The target (10) according to any one of the preceding claims, wherein an apparent light source (162) is provided by more than one light emitting element (122-1, 122-2, 122-3).

## Patentansprüche

1. Ziel (10) zur Verwendung in Vermessungsanwendungen, wobei das Ziel (10) aufweist:
ein Basiselement (100) mit einer Mittelachse (102), und
einen Reflektor (110) zum Reflektieren von Lichtstrahlen, die auf das Ziel (10) einfallen, wobei der Reflektor (110) mehrere Retroreflektoren (140) umfasst, welche derart um die Mittelachse (102) herum angeordnet sind, dass sie einen Winkelbereich von im Wesentlichen 360 Grad abdecken, wobei der Reflektor (110) einen Außenumfang (112) und einen Innenumfang (114) aufweist, definiert durch die Anordnung der Retroreflektoren, und wobei ein Retroreflektor (140-1) eine erste Seite (142), die sich an dem Außenumfang (112) befindet, und eine zweite Seite (144) aufweist, die sich an dem Innenumfang (114) befindet;
wobei das Ziel **dadurch gekennzeichnet ist, dass**:
mehrere lichtemittierende Elemente mehrere wahrnehmbare Lichtquellen (160) bereitstellen, welche um die Mittelachse (102) herum angeordnet sind, wobei eine wahrnehmbare Lichtquelle (162) innerhalb des Innenumfangs (114) des Reflektors (110) positioniert ist, um Licht in eine Richtung von der Mittelachse (102) des Basiselements (100) weg zu emittieren.

2. Ziel (10) nach Anspruch 1, wobei eine wahrnehmbare Lichtquelle (162) in der ersten Hälfte, und vorzugsweise im ersten Viertel, eines Abstands von der Mittelachse (102) zu der zweiten Seite (114) eines entsprechenden (140-1) der mehreren Retroreflektoren (140) positioniert ist.

3. Ziel (10) nach Anspruch 1 oder 2, wobei die mehreren wahrnehmbaren Lichtquellen aus N wahrnehmbaren Lichtquellen bestehen und wobei bei Halbwertsbreite, Full Width at Half Maximum, FWHM, eine wahrnehmbare Lichtquelle (162) eine Lichtintensitätsverteilung aufweist, welche eine Winkelbreite von mindestens 360/N Grad abdeckt.

4. Ziel (10) nach einem der vorhergehenden Ansprüche, wobei ein Retroreflektor (140-1) ein Tripelprisma ist.

5. Ziel (10) nach Anspruch 4, wobei ein lichtemittierendes Element (120) innerhalb des Innenumfangs (114) des Reflektors (110) positioniert und so konfiguriert ist, dass es Licht durch eine zweite Seite (144) eines entsprechenden Retroreflektors (140-1) der mehreren Retroreflektoren (140) emittiert.

6. Ziel (10) nach Anspruch 5, wobei das lichtemittierende Element (120) in der Nähe des entsprechenden Retroreflektors (140-1) positioniert ist, derart, dass mindestens 75 % einer Intensität von Licht, das durch das lichtemittierende Element (120) emittiert wird, durch den entsprechenden Retroreflektor (140-1) übertragen wird.

7. Ziel (10) nach Anspruch 4 oder 5, welches ferner mehrere optische Kupplungselemente aufweist, wobei ein optisches Kupplungselement (170) zwischen einem (120) der mehreren lichtemittierenden Elemente und einem entsprechenden Retroreflektor (140-1) angeordnet und so konfiguriert ist, dass es das Licht, das von dem einen (120) der mehreren lichtemittierenden Elemente emittiert wird, zu dem entsprechenden Retroreflektor (140-1) überträgt.

8. Ziel (10) nach Anspruch 7, wobei eine wahrnehmbare Lichtquelle (162), die von einem oder mehreren lichtemittierenden Elementen (120) bereitgestellt wird, an einer versetzten Position positioniert ist, verglichen mit einer Position eines Apex (146) eines entsprechenden Tripelprismas in einer Ebene mit einer Normalen, die von der Mittelachse (102) zu dem Apex (146) zeigt.

9. Ziel (10) nach Anspruch 7, wobei eine wahrnehmbare Lichtquelle (162), die von einem oder mehreren lichtemittierenden Elementen (120) bereitgestellt wird, an dem Apex (146) eines entsprechenden Tripelprismas positioniert ist.

10. Ziel (10) nach Anspruch 4, wobei ein lichtemittierendes Element (120) auf der ersten Seite (142) eines entsprechenden Retroreflektors (140-1) angeordnet und so konfiguriert ist, dass es durch die erste Seite (142) und in Richtung der Mittelachse (102) des Basiselements (100) Licht emittiert, wobei das Licht von dem entsprechenden Retroreflektor reflektiert wird, um von der Mittelachse (102) des Basiselements (100) weg geführt zu werden.

11. Ziel (10) nach einem der Ansprüche 4 bis 6, wobei der Apex (146) des Tripelprismas abgeschnitten ist, um die zweite Seite (144) des Retroreflektors (140-1) zu bilden.

12. Ziel (10) nach Anspruch 11, wobei eine wahrnehmbare Lichtquelle (162) entlang der Mittelachse (102) mit der Mitte einer zweiten Seite (144) eines entsprechenden Retroreflektors (140-1) in Ausrichtung gebracht ist.

13. Ziel (10) nach Anspruch 11 oder 12, wobei für jeden Retroreflektor die zweite Seite (144) so konfiguriert ist, dass sie im Wesentlichen parallel zu der ersten Seite (142) liegt.

14. Ziel (10) nach einem der Ansprüche 11 bis 13, wobei die zweite Seite (144) eine polierte Fläche aufweist.

15. Ziel (10) nach einem der vorhergehenden Ansprüche, welches ferner mehrere optische Kupplungselemente aufweist, die so konfiguriert sind, dass sie die Lichtemission der mehreren lichtemittierenden Elemente formen, wobei ein optisches Kupplungselement (170) zwischen einem lichtemittierenden Element (120) und seiner entsprechenden wahrnehmbaren Lichtquelle (162) angeordnet ist.

16. Ziel (10) nach einem der vorhergehenden Ansprüche, wobei jedes lichtemittierende Element mindestens eines aus einer Leuchtdiode, einem Laser oder einem oberflächenemittierenden Laser mit vertikalem Resonator ist.

17. Ziel (10) nach einem der vorhergehenden Ansprüche, wobei die mehreren Retroreflektoren (140) 6 bis 10, vorzugsweise 8, sind.

18. Ziel (10) nach einem der vorhergehenden Ansprüche, wobei eine wahrnehmbare Lichtquelle (162) durch mehr als ein lichtemittierendes Element (122-1, 122-2, 122-3) bereitgestellt wird.

## Revendications

1. Cible (10) destinée à être utilisée dans des applications d'arpentage, ladite cible (10) comprenant :
un élément de base (100) ayant un axe central (102), et
un réflecteur (110) pour réfléchir des faisceaux lumineux incidents sur ladite cible (10), ledit réflecteur (110) incluant une pluralité de rétro-réflecteurs (140) agencés autour dudit axe central (102) pour couvrir une aire angulaire d'essentiellement 360 degrés, dans laquelle ledit réflecteur (110) présente une circonférence externe (112) et une circonférence interne (114) tels que définies par l'agencement des rétro-réflecteurs et dans laquelle un rétro-réflecteur (140-1) présente un premier côté (142) situé sur la circonférence externe (112) et un second côté (144) situé sur la circonférence interne (114) ;
ladite cible étant **caractérisée par** :
une pluralité d'éléments émetteurs de lumière fournissant une pluralité de sources de lumière apparente (160) agencées autour dudit axe central (102), dans laquelle une source de lumière apparente (162) est positionnée à l'intérieur de la circonférence interne (114) du réflecteur (110) pour émettre de la lumière dans une direction déviée de l'axe central (102) de l'élément de base (100).

2. Cible (10) selon la revendication 1, dans laquelle une source de lumière apparente (162) est positionnée dans la première moitié, et de préférence dans le premier quart, d'une distance de l'axe central (102) vers le second côté (114) d'un correspondant (140-1) de ladite pluralité de rétro-réflecteurs (140).

3. Cible (10) selon la revendication 1 ou 2, dans laquelle la pluralité de sources de lumière apparente consiste en N sources de lumière apparente, et dans laquelle, à largeur à mi-hauteur, FWHM, une source de lumière apparente (162) présente une distribution d'intensité lumineuse couvrant une largeur angulaire d'au moins 360/N degrés.

4. Cible (10) selon l'une quelconque des revendications précédentes, dans laquelle un rétro-réflecteur (140-1) est un prisme cubique de coin.

5. Cible (10) selon la revendication 4, dans laquelle un élément émetteur de lumière (120) est positionné à l'intérieur de la circonférence interne (114) du réflecteur (110) et configuré pour émettre de la lumière par un second côté (144) d'un rétro-réflecteur (140-1) correspondant de ladite pluralité de rétro-réflecteurs (140).

6. Cible (10) selon la revendication 5, dans laquelle l'élément émetteur de lumière (120) est positionné à proximité du rétro-réflecteur (140-1) correspondant de telle façon qu'au moins 75 % d'une intensité de lumière émise par l'élément émetteur de lumière (120) est transmise par le rétro-réflecteur (140-1) correspondant.

7. Cible (10) selon l'une quelconque des revendications 4 ou 5, comprenant en outre une pluralité d'éléments de couplage optique, dans laquelle un élément de couplage optique (170) est agencé entre un (120) de la pluralité d'éléments d'émission de lumière et un rétro-réflecteur (140-1) correspondant et configuré pour transmettre la lumière émise dudit un (120) de la pluralité d'éléments émetteurs de lumière au rétro-réflecteur (140-1) correspondant.

8. Cible (10) selon la revendication 7, dans laquelle une source de lumière apparente (162) fournie par un ou plusieurs éléments émetteurs de lumière (120) est positionnée à une position décalée comparé à une position d'un sommet (146) d'un prisme cubique de coin correspondant dans un plan ayant une normale pointant de l'axe central (102) vers ledit sommet (146).

9. Cible (10) selon la revendication 7, dans laquelle une source de lumière apparente (162) fournie par un ou plusieurs éléments émetteurs de lumière (120) est positionnée au sommet (146) d'un prisme cubique de coin correspondant.

10. Cible (10) selon la revendication 4, dans laquelle un élément d'émission de lumière (120) est agencé sur le premier côté (142) d'un rétro-réflecteur (140-1) correspondant et configuré pour émettre de la lumière par le premier côté (142) et en direction de l'axe central (102) de l'élément de base (100), ladite lumière étant réfléchie par le rétro-réflecteur correspondant pour être déviée de l'axe central (102) de l'élément de base (100).

11. Cible (10) selon l'une quelconque des revendications 4-6, dans laquelle le sommet (146) du prisme cubique de coin est coupé pour former le second côté (144) du rétro-réflecteur (140-1).

12. Cible (10) selon la revendication 11, dans laquelle une source de lumière apparente (162) est alignée, le long de l'axe central (102), avec le centre du second côté (144) d'un rétro-réflecteur (140-1) correspondant.

13. Cible (10) selon la revendication 11 ou 12, dans laquelle, pour chaque réflecteur, le second côté (144) est configuré pour être essentiellement parallèle au premier côté (142).

14. Cible (10) selon l'une quelconque des revendications 11-13, dans laquelle le second côté (144) comprend une surface polie.

15. Cible (10) selon l'une quelconque des revendications précédentes, comprenant en outre une pluralité d'éléments de couplage optique configurés pour former l'émission de lumière de la pluralité d'éléments d'émission de lumière, dans laquelle un élément de couplage optique (170) est agencé entre un élément d'émission de lumière (120) et sa source de lumière apparente (162) correspondante.

16. Cible (10) selon l'une quelconque des revendications précédentes, dans laquelle chaque élément émetteur de lumière est au moins un d'une diode électro-luminescente, d'un laser ou d'un laser à émission de surface à cavité verticale.

17. Cible (10) selon l'une quelconque des revendications précédentes, dans laquelle la pluralité de rétro-réflecteurs (140) est entre 6 et 10, de préférence 8.

18. Cible (10) selon l'une quelconque des revendications précédentes, dans laquelle une source de lumière apparente (162) est fournie par plus d'un élément d'émission de lumière apparent (122-1, 122-2, 122-3).
